**Europäisches Patentamt**

**European Patent Office**

**Office européen des brevets**

(11) Veröffentlichungsnummer: **0 127 067**
A1

(12) # EUROPÄISCHE PATENTANMELDUNG

(21) Anmeldenummer: **84105535.3**

(22) Anmeldetag: **15.05.84**

(51) Int. Cl.³: **B 65 H 29/14**
G 06 K 13/12, B 65 H 29/42

(30) Priorität: **17.05.83 DE 3317865**

(43) Veröffentlichungstag der Anmeldung:
**05.12.84 Patentblatt 84/49**

(84) Benannte Vertragsstaaten:
**IT**

(71) Anmelder: **Licentia Patent-Verwaltungs-GmbH
Theodor-Stern-Kai 1
D-6000 Frankfurt/Main 70(DE)**

(72) Erfinder: **Werner, Frank
Gnadensee-Weg 16
D-7752 Reichenau 2(DE)**

(74) Vertreter: **Schulze, Harald Rudolf, Dipl.-Ing. et al,
Licentia Patent-Verwaltungs-GmbH Theodor-Stern-Kai 1
D-6000 Frankfurt/Main 70(DE)**

(54) **Verteilfachstrecke für flache Sendungen wie Briefe.**

(57) Bei einer Verteilfachstrecke für flache, über eine Förderstrecke nacheinander einlaufende Sendungen wie Briefe mit mehreren hintereinander angeordneten Stapelfächern, denen die Sendungen über den einzelnen Fächern getrennt zugeordnete Weichen zugeführt werden, wird eine störungsfreie Stapelung der verteilten Sendungen in den einzelnen Stapelfächern dadurch gewährleistet, daß mittels eines im Förderweg dicht vor jedem einzelnen Stapelfach angeordneten gummi-elastischen rollenförmigen Aufsatzes (3a), die Oberkante jeder Sendung (8a) an ein ihm gegenüberliegendes Leitblech (4) zwangsangelegt wird.

Abb. 4

EP 0 127 067 A1

0127067

Licentia
Patent-Verwaltungs-GmbH
Theodor-Stern-Kai 1

D-6000 Frankfurt 70

PTL-UL/Schz/go
UL 83/36
Aktz.: P 33 17 865.8

Beschreibung

## Verteilfachstrecke für flache Sendungen wie Briefe

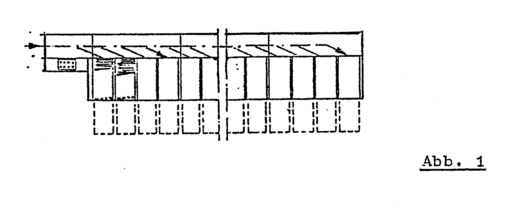

Die Erfindung bezieht sich auf eine Verteilfachstrecke gemäß dem Oberbegriff des Patentanspruchs 1. Eine solche Verteilfachstrecke dient in automatischen Briefverteilanlagen beispielsweise einer Grobverteilung der über die Förderstrecke nacheinander einlaufenden Briefe nach Postleitzahlgebieten und besteht demgemäß im Sinne der Abb. 1 aus mehreren, diesen Gebieten getrennt zugeordneten und hintereinander angeordneten Stapelfächern.

Über eine Fachstrecke mit Weichen werden die Sendungen den einzelnen Stapelfächern zugeordnet und darin abgestapelt. Am Eingang der Fachstrecke befindet sich eine Meßstrecke, in der

...

geprüft wird, ob die Sendung "zu lang" oder die Lücke zwischen den aufeinander folgenden Sendungen zu klein ist. Die Lücke darf einen bestimmten Wert nicht unterschreiten, da sonst die Weiche nicht genügend Zeit hat, um in der Lücke zu öffnen oder zu schließen.

Nicht bearbeitbare Sendungen oder bei zu kleiner Lücke werden die Sendungen in einem Rückweisungsfach ("Rejectfach") abgestapelt.

Der Erfindung liegt die Aufgabe zugrunde, in einer solchen Verteilfachstrecke die zu stapelnden Sendungen möglichst exakt auf ihre Vorderkanten auszurichten, ihre Faltung zu vermeiden und sie nicht mit umgebogenen Ecken zu stapeln, weil ansonsten beim Einstapeln in das jeweilige Stapelfach dadurch Störungen auftreten können, weil das Einstapeldreieck immer mehr zubaut.

Dieser Zustand tritt hauptsächlich dann auf, wenn nicht allzu steife oder labile Sendungen und Massenauflieferungen gestapelt werden.

Beim Einstapeln mit minimaler Lücke zwischen den Sendungen ist die Hinterkante der vorauslaufenden Sendung noch nicht aus dem Einschußbereich, so daß die nachfolgende Sendung auf die Hinterkante auffährt. Die Folge ist, es kommt zu einer Störung (Verstopfung) und die Anlage stoppt. Das bedeutet unnötiger Stop der Anlage = Leistungsminderung oder Reduzierung des Durchsatzes.

Wesentlich für die Erfindung ist somit, daß durch ihre Anwendung die vorerwähnten verschiedenen Ursachen möglicher Störungen bzw. eine schlechte Stapelqualität vermieden wird.

...

Die erfindungsgemäße Lösung dieser Aufgabe ist dem kennzeichnenden Teil des Anspruchs 1 entnehmbar. Die Unteransprüche beziehen sich auf vorteilhafte Weiterbildungen der Erfindung, wobei jedoch der Kombination der Gegenstände der Ansprüche 1 und 2 besondere Bedeutung zukommt. Das Merkmal des Anspruchs 1 in Verbindung mit einer Stapelspindel gemäß Anspruch 3, letztere Gegenstand des DBP 12 53 170 ist, ist auch ohne zusätzliche Wulstrolle gemäß Anspruch 2 bereits von erheblichem praktischen Nutzen.

Das vorgenannte Patent bezieht sich auf eine Stapeleinrichtung für flaches Fördergut, wie insbesondere Postsendungen, bei der die Sendungen über eine Zuführungseinrichtung in den Stapel einlaufen, mit ihrer Vorderkante gegen eine feste Wand stoßen und in einer Lage senkrecht zu dieser Wand gestapelt werden, wobei den einzustapelnden Sendungen eine versteifende Krümmung erteilt wird.

Die versteifende Krümmung wird hierbei dadurch bewirkt, daß die Zuführungseinrichtung der Sendungen eine gewölbte Rolle enthält, die den Sendungen während des Einlaufens in die Einrichtung die versteifende Krümmung erteilt und die in einem Abstand von der festen Wand angeordnet ist, der nur wenig größer ist als die Länge der Sendungen.

Mit der gewölbten Rolle wirkt vorteilhafter Weise eine federnde Gegenrolle mit komplementärer Krümmung zusammen.

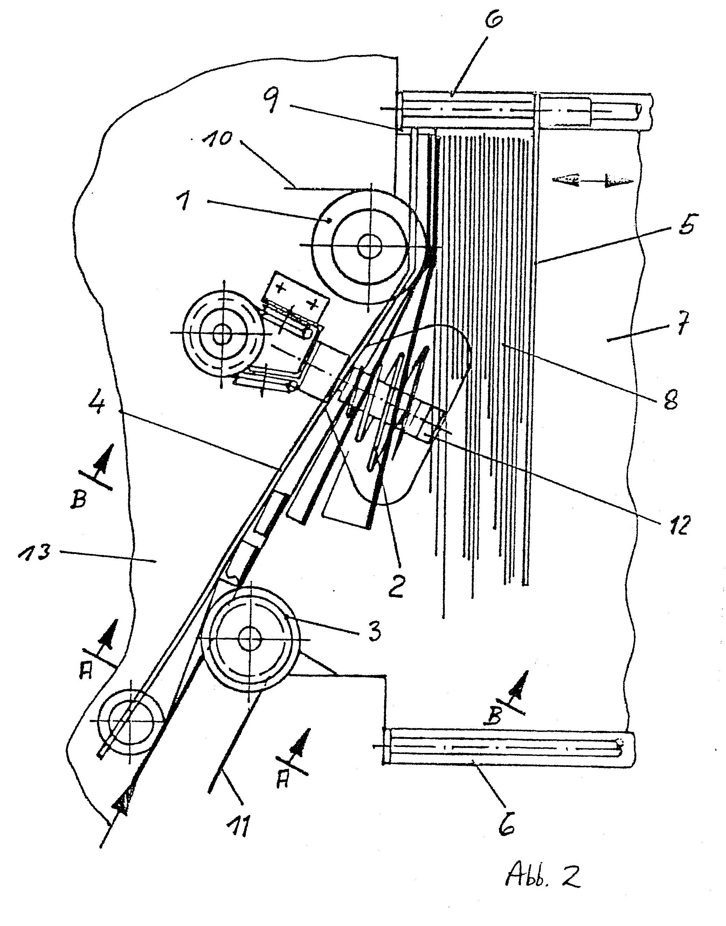

Anhand der Abbildungen 2 bis 4 und der darin gezeigten Ausführungsbeispiele der Erfindung wird diese nunmehr näher beschrieben. Hierbei zeigen:

. . .

Abb. 2    Stapelfach mit Stapelspindel und Wulstrolle mit Aufsatz

Ansicht von oben

Es bedeuten:

1  Stapelrolle
2  Stapelspindel
3  Wulstrolle mit Aufsatz    3a
4  Leitblech, Leitzaun    4a
5  Einlegeblech
6  Stapelwand
7  Stapelboden
8  Sendungsstapel, Sendung    8a
9  Anschlag
10  Transportriemen
11  Transportriemen
12  Rillenkugellager
13  Grundplatte


Abb. 3    Schnitt B-B

Einzelne Phasen der Sendung beim Stapelvorgang

Phase a = Einlauf der Sendung

Phase b = Übernahme der Unterkante durch die
Stapelspindel

Phase c = Transport in der Stapelspindel

Phase d = Transport in der Stapelspindel

Phase e = Anlegen der Sendung an den Sendungsstapel oder Einlegeblech
(Oberkante der Sendung noch nicht
am Stapel angelegt)


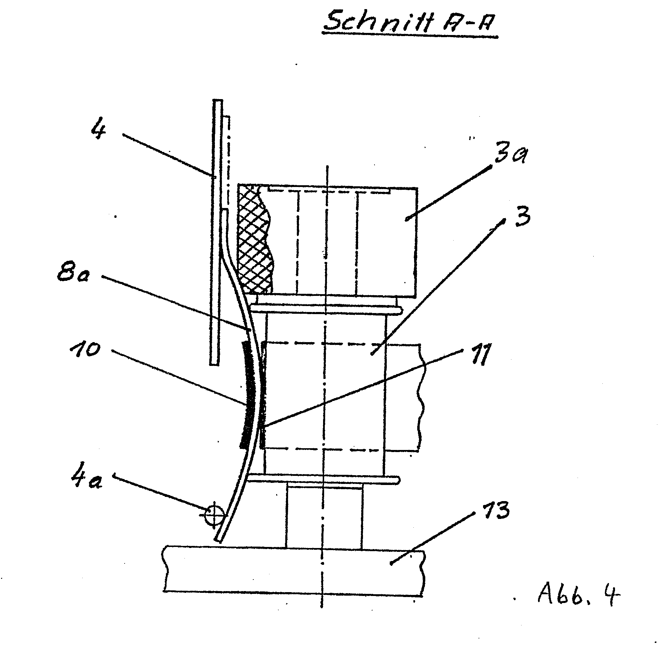

Abb. 4    Schnitt A-A

Wölben der Sendung durch die Wulstrolle  3 Anlegen der Sendung an das Leitblech  4
durch den gummi-elastischen Aufsatz  3a .


Jede Sendung wird über ein Deckband 10, 11 der Wulstrolle 3
zugeführt. Die Wulstrolle hat die Aufgabe, die Sendung durchzuwölben (Abb. 4). Die Sendung wird dadurch auf ihrer Längsachse stabil.

...

Die Aufgabe des gummi-elastischen Aufsatzes 3a ist es, die Sendung im oberen Bereich an das Leitblech 4 anzulegen und daran entlang weiterzuführen.

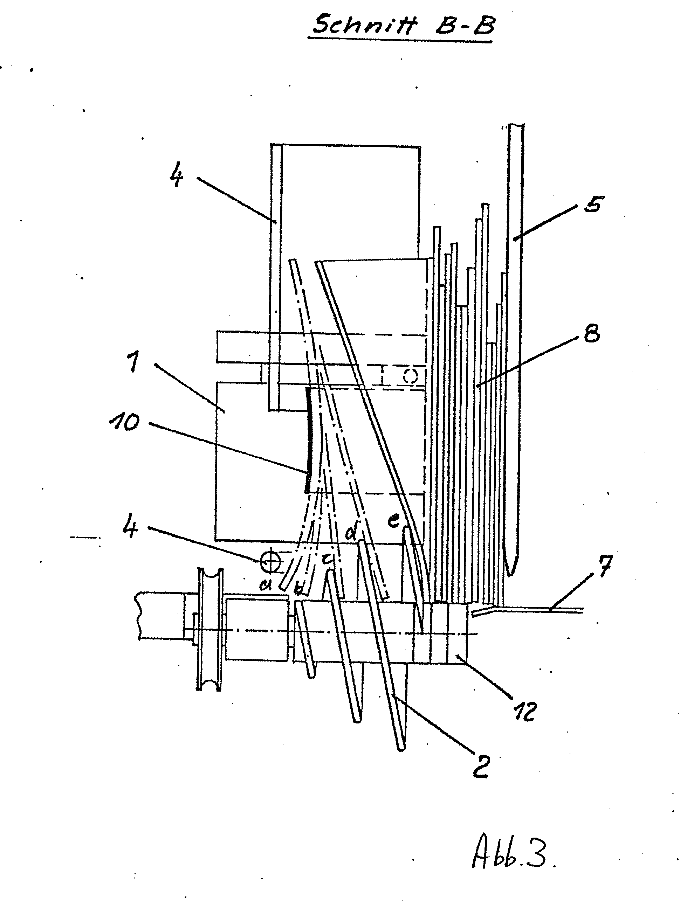

Die Sendung bleibt so lange durchgewölbt, bis die Hinterkante der Sendung von der Wulstrolle 3 freigegeben wird. Die Durchwölbung löst sich auf - die untere Kante der Sendung bewegt sich in Richtung Stapelspindel 2 und wird von dieser übernommen und in Steigungsrichtung zum Stapel 8 bzw. Einlegeblech 5 transportiert. Die Einbaulage der Stapelspindel ist entsprechend. Während dieses Vorgangs wird die Unterkante der Sendung durch die Stapelspindel, nicht aber die Oberkante, gleich schnell aus dem Einschußbereich transportiert (Abb. 3).

Um ein Auffahren auf die hintere obere Ecke der vorauslaufenden bzw. bereits eingestapelten Sendung zu verhindern, wird die Oberkante der nachfolgenden Sendung 8a durch den Aufsatz 3a an das Leitblech 4 zwangsangelegt und geführt (Abb. 4). Ein Berühren der vorauslaufenden hinteren Oberkante (Ecke) mit der nachfolgenden vorderen Oberkante (Ecke) ist ausgeschlossen. Diese Lösung ermöglicht es, eine Sendungsfolge mit minimalster Lücke einzustapeln.

Durch die kegelige Form der Stapelspindel 2 wird der Sendungsstapel 8 abgestützt. Am Spindelende entsteht, verursacht durch den Auslauf des Spindelganges, ein Rütteleffekt, der bewirkt, daß der Sendungsstapel im Bereich der Stapelrolle 1 aufgelockert wird (Stapeldruck wird reduziert, denn der Stapeldruck nimmt mit zunehmender Stapellänge zu). Die Reibung (Stapeldruck) zwischen Sendung und Stapelrolle 1 ist nicht mehr so groß, so daß die einlaufende Sendung sicher bis zum Anschlag 9 durchgezogen bzw. eingeschossen wird.

- 6 -

Licentia                                    PTL-UL/Schz/go
Patent-Verwaltungs-GmbH                     UL 83/36
Theodor-Stern-Kai 1

D-6000 Frankfurt 70


Patentansprüche


1. Verteilfachstrecke für flache, über eine Förderstrecke
nacheinander einlaufende Sendungen wie Briefe mit mehreren
hintereinander angeordneten Stapelfächern, denen die Sendungen über den einzelnen Fächern getrennt zugeordnete Weichen
zugeführt werden, dadurch gekennzeichnet, daß im Förderweg
dicht vor jedem einzelnen Stapelfach ein gummi-elastischer
rollenförmiger Aufsatz (3a) angeordnet ist, der die Oberkante
jeder Sendung an ein ihm gegenüberliegendes Leitblech (4)
zwangsanlegt.


2. Verteilfachstrecke nach Anspruch 1, dadurch gekennzeichnet, daß im Förderweg dicht vor jedem einzelnen Stapelfach
unter dem rollenförmigen Aufsatz (3a) eine Wulstrolle (3)
angeordnet ist, die den Sendungen eine versteifende Krümmung
erteilt.


...

3. Verteilfachstrecke nach Anspruch 1 oder 2, dadurch gekennzeichnet, daß im Förderweg unmittelbar vor jedem einzelnen Stapelfach eine Stapelspindel (2) angeordnet ist, die aus einem kegelförmigen Spiralkörper besteht und jede einlaufende Sendung in Steigungsrichtung der Spirale zum Stapelfach transportiert (Abb. 2).

4. Verteilfachstrecke nach Anspruch 3, dadurch gekennzeichnet, daß das jeweilige kegelbodenseitige Spindelende den ihm zugeordneten Stapel (8) abstützt, so daß letzterer durch den Auslauf des Spindelganges gerüttelt wird.

5. Verteilfachstrecke nach Anspruch 3 oder 4, dadurch gekennzeichnet, daß die Einbaulage jeder Stapelspindel derart gewählt ist, daß die Unterkante jeder Sendung - nicht aber deren Oberkante - während des Sendungstransports durch die Spindel gleichschnell aus dem Einschußbereich transportiert wird.

Abb. 1

Abb. 2

Schnitt B-B

Abb.3.

0127067

## Schnitt A-A

Abb. 4

Europäisches
Patentamt

**EUROPÄISCHER RECHERCHENBERICHT**

0127067

Nummer der Anmeldung

EP  84 10 5535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | EP-A-0 049 718  (BELL TELEPHONE MANUFACTURING COMP.) * Figuren 1-6,10; Seite 6, Zeilen 3-30;  Seite  7, Zeile 19 - Seite 8, Zeile 19; Seite 11, Zeile 11 - Seite 13, Zeile 10 * | 1-5 | B 65 H  29/14 G 06 K  13/12 B 65 H  29/42 |
| | --- | | |
| Y | CH-A-  516 463 (INGENIEURSBUREAU DE RIDDER N.V.) *  Figuren 1-3; Spalte 2, Zeile 4 -  Spalte  3, Zeile 17; Spalte 3, Zeilen  40-46;  Spalte  5, Zeilen 1-14; Spalte 5, Zeile 40 - Spalte 6, Zeile 11 * | 1,2 | |
| | --- | | |
| A,D | DE-B-1 253 170  (TELEFUNKEN PATENTVERWERTUNGS GmbH) | 2 | RECHERCHIERTE SACHGEBIETE (Int. Cl. ³) |
| | --- | | |
| A | US-A-3 131 932  (MAIDMENT) | 1,3-4 | |
| | --- | | B 07 C |
| A | US-A-3 865 365  (HARDIN) * Figur 1 * | 1 | B 65 H G 06 K |
| | ----- | | |

Der vorliegende Recherchenbericht wurde für alle Patentansprüche erstellt.

| Recherchenort DEN HAAG | Abschlußdatum der Recherche 02-08-1984 | Prüfer PESCHEL W. |
|---|---|---|